(19) **Europäisches Patentamt European Patent Office Office européen des brevets**

(11) **EP 4 773 725 A2**

(12) **EUROPEAN PATENT APPLICATION**

(43) Date of publication:
08.07.2026  Bulletin 2026/28

(21) Application number: 26161954.8

(22) Date of filing: 01.04.2021

(51) International Patent Classification (IPC):
*H04W 76/28* (2018.01)

(52) Cooperative Patent Classification (CPC):
H04W 52/0216; H04W 68/005; H04W 76/28;
Y02D 30/70

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR

(62) Document number(s) of the earlier application(s) in
accordance with Art. 76 EPC:
21934017.1 / 4 190 043

(71) Applicant: ZTE Corporation
Shenzhen, Guangdong 518057 (CN)

(72) Inventors:
• AI, Jianxun
  Shenzhen, Guangdong, 518057 (CN)
• SHA, Xiubin
  Shenzhen, Guangdong, 518057 (CN)

• LIU, Jing
  Shenzhen, Guangdong, 518057 (CN)

(74) Representative: Vossius & Partner
Patentanwälte Rechtsanwälte mbB
Siebertstraße 3
81675 München (DE)

Remarks:
•This application was filed on 03-03-2026 as a
divisional application to the application mentioned
under INID code 62.
•Claims filed after the date of receipt of the divisional
application (Rule 68(4) EPC).

(54) **SCHEDULING AND TRANSMISSION OF SYSTEM**

(57)    A wireless communication method for use in a wireless device is disclosed. The method comprises determining a hyper system frame number of a paging hyper-frame for a wireless terminal in an extended discontinuous reception, DRX, cycle based on at least one bit of an identifier of the wireless terminal, wherein the at least one bit is different from bits used for determining at least one of a system frame number of a paging frame or a paging occasion for the wireless terminal in a DRX cycle.

FIG. 3

**Description**

This document is directed generally to wireless communications.

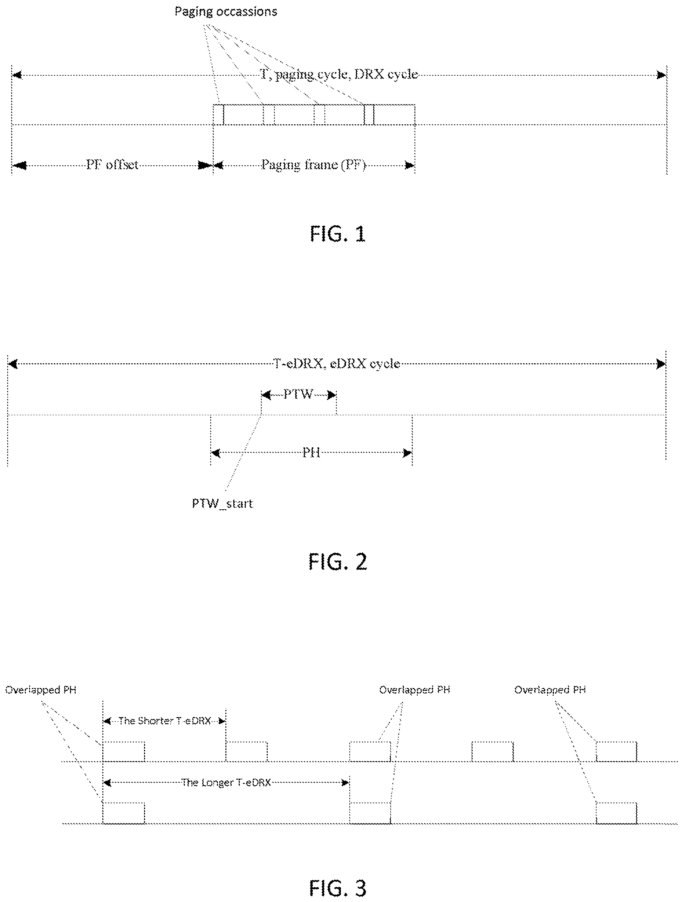

In new radio (NR) systems, user equipments (UEs) monitor paging according to a discontinuous reception (DRX) cycle and a paging control channel (PCCH) configuration. That is, the UE determines the time domain resource (e.g. paging frame and paging occasion within the paging frame) according to the DRX cycle and a paging configuration and monitors a paging message on the paging occasion (see FIG. 1).

The paging frame (PF) is determined according to the following formula:

System frame number (SFN) for the PF is determined by:

$$(SFN + PF\_offset) \bmod T = (T \operatorname{div} N)*(UE\_ID \bmod N),$$

where index (i_s), indicating the index of the paging occasion (PO), is determined by:

$$i\_s = floor\ (UE\_ID/N) \bmod Ns,$$

where T is the DRX cycle of the UE (T is determined by the shortest of the UE specific DRX value(s), if configured by RRC and/or upper layers, and a default DRX value broadcast in system information. In RRC_IDLE state, if UE specific DRX is not configured by upper layers, the default value is applied); N is the number of total paging frames in T; Ns is the number of paging occasions for a PF; PF_offset is the offset used for PF determination which is configured by the network; UE_ID is 5th generation serving temporary mobile subscriber identity (5G-S-TMSI) mod 1024; the 5G-S-TMSI is a 48 bit long bit string. The 5G-S-TMSI in the formula above shall be interpreted as a binary number where the left most bit represents the most significant bit.

Thus, the present disclosure aims at overcoming, among others, the aforementioned deficiencies of the prior art.

In particular, the present disclosure relates to a wireless communication method for use in a wireless device. The method comprises:
determining a hyper system frame number of a paging hyper-frame for a wireless terminal in an extended discontinuous reception, DRX, cycle based on at least one bit of an identifier of the wireless terminal, wherein the at least one bit is different from bits used for determining at least one of a system frame number of a paging frame or a paging occasion for the wireless terminal in a DRX cycle.

Various embodiments may preferably implement the following features:
Preferably, a length of the extended DRX cycle is greater than a length of the DRX cycle.

Preferably, a length of the extended DRX cycle is greater than or equal to 10.24 seconds.

Preferably, the hyper system frame number is determined by:

$$H\text{-}SFN \bmod T\text{-}eDRX = UE\_ID\_eDRX \bmod T\text{-}eDRX,$$

or

$$(H\text{-}SFN + offset) \bmod T\text{-}eDRX = UE\_ID\_eDRX \bmod T\text{-}eDRX,$$

wherein: H-SFN is the hyper system frame number, mod is a modular operator, T-eDRX is a length of the extended DRX cycle, offset is a H-SFN offset, and UE_ID_eDRX is the at least one bit and is determined by:

$$UE\_ID\_eDRX = floor\ (UE\_ID/M),$$

or

$$UE\_ID\_eDRX = (UE\_ID\ /\ M),$$

wherein: floor () is a floor function, UE_ID is the identifier of the wireless terminal, and M is an integer configured by a higher layer signaling or predefined.

Preferably, the hyper system frame number is determined by:

$$\text{H-SFN} \bmod \text{T-eDRX} = \text{UE\_ID\_eDRX} \bmod \text{T-eDRX},$$

or

$$(\text{H-SFN} + \text{offset}) \bmod \text{T-eDRX} = \text{UE\_ID\_eDRX} \bmod \text{T-eDRX},$$

wherein: H-SFN is the hyper system frame number, mod is a modular operator, T-eDRX is a length of the extended DRX cycle, offset is a H-SFN offset, and UE_ID_eDRX is the at least one bit and is determined by:

$$\text{UE\_ID\_eDRX} = \text{floor}\,(\text{UE\_ID}/(N^*Ns)),$$

or

$$\text{UE\_ID\_eDRX} = (\text{UE\_ID}\,/\,(N^*Ns)),$$

wherein: floor () is a floor function, UE_ID is the identifier of the wireless terminal, N is number of paging frames in a second DRX cycle, and Ns is number of paging occasions for a paging frame.

Preferably, the second DRX cycle is determined by the shortest one in specific DRX value(s) (e.g. cycles) assigned to (configured for) the wireless terminal.

Preferably, the wireless device is one of the wireless terminal, a core network or a wireless network node.

The present disclosure relates to a wireless communication method for use in a wireless device. The method comprises determining a system frame number of a starting point of a paging time window within a paging hyper-frame for a wireless terminal in an extended discontinuous reception, DRX, cycle based on at least one bit of an identifier of the wireless terminal, wherein the at least one bit is different from bits used for determining at least one of a system frame number of a paging frame, a paging occasion for the wireless terminal in a DRX cycle or a hyper system frame number of the paging hyper frame.

Various embodiments may preferably implement the following features:

Preferably, the system frame number of the start point of the paging time window is determined by:

$$\text{SFN} = K1^* \, i_{eDRX},$$

wherein, SFN is the system frame number of the start point, K1 is an integer, and ieDRX is determined by at least one of following:

$$i_{eDRX} = \text{floor}\,(\text{UE\_ID}\,/(N^*Ns^*\text{T-eDRX}))\bmod K2,$$

$$i_{eDRX} = \text{floor}\,(\text{floor}\,(\text{UE\_ID}\,/(N^*Ns))\,/\,\text{T-eDRX}) \bmod K2,$$

$$i_{eDRX} = \text{floor}\,(\text{UE\_ID}\,/(N^*Ns^*\text{T-eDRX})) \bmod K2,$$

or

$$i_{eDRX} = (\text{UE\_ID}\,/(N^*Ns^*\text{T-eDRX}) \bmod K2,$$

wherein K2 is an integer, UE_ID is the identifier of the wireless terminal, N is number of paging frames in a second DRX cycle, Ns is number of paging occasions for a paging frame, and T-eDRX is a length of the extended DRX cycle.

Preferably, the second DRX cycle is determined by the shortest one in specific DRX value(s) (e.g. cycles) assigned to (configured for) the wireless terminal.

$$\text{Preferably, } K2 = 1024/K1.$$

Preferably, K1 and K2 are predefined or configured by a higher layer signaling.

Preferably, the wireless device is one of the wireless terminal, a core network or a wireless network node.

The present disclosure relates to a wireless communication method for use in a wireless terminal. The method comprises receiving, from a wireless network node, a first discontinuous reception, DRX, cycle length of a first operation state of the wireless terminal and a second DRX cycle length of a second operation state of the wireless terminal, wherein the first DRX cycle length is a product of a scaling factor and the second DRX cycle length, wherein the first operation state is one of an idle state or an inactive state and the second operation state is another one of the idle state or the inactive state.

Various embodiments may preferably implement the following feature:
Preferably, the scaling factor is n or 1/n, wherein n is a positive integer.

The present disclosure relates to a wireless communication method for use in a first wireless network node. The method comprises transmitting, to a wireless terminal, a core network or a second wireless network node, a first discontinuous reception, DRX, cycle length of a first operation state of the wireless terminal and a second DRX cycle length of a second operation state of the wireless terminal, wherein the first DRX cycle length is a product of a scaling factor and the second DRX cycle length, wherein the first operation state is one of an idle state or an inactive state and the second operation state is another one of the idle state or the inactive state.

Various embodiments may preferably implement the following features:
Preferably, the scaling factor is n or 1/n, wherein n is a positive integer.

The present disclosure relates to a wireless communication method for use in a wireless device. The method comprises determining a starting point of a paging time window within a first paging hyper-frame for a wireless terminal based on a length of an extended DRX cycle, wherein the extended DRX cycle is associated with an idle state or an inactive state.

Various embodiments may preferably implement the following features:
Preferably, the paging time window is used for monitoring CN paging and RAN paging.

Preferably, an extended DRX cycle length associated with the idle state is shorter than or equal to an extended DRX cycle length associated with the inactive state and the extended DRX cycle is associated with the idle state.

Preferably, an extended DRX cycle length associated with the idle state is longer than or equal to an extended DRX cycle length associated with the inactive state and the extended DRX cycle is associated with the idle state.

Preferably, the first paging hyper-frame within a first extended DRX cycle overlaps a second paging hyper-frame within a second extended DRX cycle, wherein the first extended DRX cycle is associated with one of the idle state or the inactive state and the second extended DRX cycle is associated with another one of the idle state or the inactive state.

Preferably, the wireless device is configured with an extended DRX cycle for the idle state and another extended DRX cycle for the inactive state.

Preferably, the first paging hyper-frame is associated with a first extended DRX cycle, wherein the first extended DRX cycle is associated with the inactive state, or the shorter one between the extended DRX cycle for the inactive state and the extended DRX cycle for the idle state.

Preferably, each of the extended DRX cycle length associated with the idle state and the extended DRX cycle length associated with the inactive state is longer than 10.24 seconds.

Preferably, the wireless device is one of the wireless terminal, a core network or a wireless network node.

The present disclosure relates to a wireless communication method for use in a wireless device. The method comprises determining a paging occasion for a wireless terminal based on a length of an extended DRX cycle, wherein the extended DRX cycle is associated with an idle state or an inactive state.

Various embodiments may preferably implement the following features:
Preferably, the paging occasion is configured to monitor a paging from a core network and from a wireless network node

Preferably, an extended DRX cycle length associated with the idle state is shorter than or equal to an extended DRX cycle length associated with the inactive state and the extended DRX cycle is associated with the idle state.

Preferably, an extended DRX cycle length associated with the idle state is longer than or equal to an extended DRX cycle length associated with the inactive state and the extended DRX cycle is associated with the idle state.

Preferably, the extended DRX cycle is associated with the idle state, wherein a first paging occasion associated with the idle state and a second paging occasion associated with the inactive state are determined based on the length of the extended DRX cycle associated with the idle state.

Preferably, a first paging frame comprising the PO in a first DRX cycle overlaps a second paging frame comprising the PO in a second DRX cycle, wherein the first DRX cycle is associated with one of the idle state or the inactive state and the second DRX cycle is associated with another one of the idle state or the inactive state.

Preferably, each of the extended DRX cycle length associated with the idle state and the extended DRX cycle length associated with the inactive state is shorter than or equal to 10.24 seconds.

Preferably, the wireless device is one of the wireless terminal, a core network or a wireless network node.

The present disclosure relates to a wireless communication method for use in a core network node. The method comprises transmitting, to a wireless network node, a message which is associated with a wireless terminal and comprises a first extended discontinuous reception, DRX, cycle length for an idle state and a second extended DRX cycle length for an inactive state.

Various embodiments may preferably implement the following feature:
Preferably, the message is associated with one of: a setup of wireless terminal context of the wireless terminal, a modification of wireless terminal context of the wireless terminal, or a paging message.

The present disclosure relates to a wireless communication method for use in a wireless network node. The method comprises receiving, from a core network node, a message which is associated with a wireless terminal and comprises a first extended discontinuous reception, DRX, cycle length for an idle state and a second extended DRX cycle length for an inactive state.

Various embodiments may preferably implement the following feature:
Preferably, the message is associated with one of: a setup of wireless terminal context of the wireless terminal, a modification of wireless terminal context of the wireless terminal, or a paging message.

The present disclosure relates to a wireless communication method for use in a wireless network node. The method comprises transmitting, to a core network node, a message which is associated with a wireless terminal and comprises a second extended DRX cycle length for an inactive state.

Various embodiments may preferably implement the following feature:
Preferably, the message is associated with one of: the wireless terminal entering or leaving the inactive state, or negotiating the second extended DRX cycle length for the inactive state.

The present disclosure relates to a first wireless communication method for use in a wireless network node. The method comprises transmitting, to a second wireless network node, a message which is associated with a wireless terminal and comprises a first extended discontinuous reception, DRX, cycle length for an idle state and a second extended DRX cycle length for an inactive state.

Various embodiments may preferably implement the following feature:
Preferably, the message is associated with a paging message which is used for requesting paging the wireless terminal.

The present disclosure relates to a wireless communication method for use in a second wireless network node. The method comprises receiving, from a first wireless network node, a message which is associated with a wireless terminal and comprises a first extended discontinuous reception, DRX, cycle length for an idle state and a second extended DRX cycle length for an inactive state.

Various embodiments may preferably implement the following feature:
Preferably, the message is associated with a paging message which is used for requesting paging the wireless terminal.

The present disclosure relates to a wireless communication method for use in a core network node. The method comprises receiving, from a wireless network node, a message which is associated with a wireless terminal and comprises a second extended DRX cycle length for an inactive state.

Various embodiments may preferably implement the following feature:
Preferably, the message is associated with one of: the wireless terminal entering or leaving the inactive state, or negotiating the second extended DRX cycle length for the inactive state.

The present disclosure relates to a wireless device. The wireless device comprises a processor configured to determine a hyper system frame number of a paging hyper-frame for a wireless terminal in an extended discontinuous reception, DRX, cycle based on at least one bit of an identifier of the wireless terminal, wherein the at least one bit is different from bits used for determining at least one of a system frame number of a paging frame or a paging occasion for the wireless terminal in a DRX cycle.

Various embodiments may preferably implement the following feature:
Preferably, the processor is further configured to perform any of aforementioned wireless communication methods.

The present disclosure relates to a wireless device. The wireless device comprises a processor, configured to determine a system frame number of a starting point of a paging time window within a paging hyper-frame for a wireless terminal in a extended discontinuous reception, DRX, cycle based on at least one bit of an identifier of the wireless terminal, wherein the at least one bit is different from bits used for determining at least one of a system frame number of a paging frame, a paging occasion for the wireless terminal in a DRX cycle or a hyper system frame number of the paging hyper frame.

Various embodiments may preferably implement the following feature:
Preferably, the processor is further configured to perform any of aforementioned wireless communication methods.

The present disclosure relates to a wireless terminal. The wireless terminal comprises a communication unit, configured to receive, from a wireless network node, a first discontinuous reception, DRX, cycle length of a first operation state of the wireless terminal and a second DRX cycle length of a second operation state of the wireless terminal, wherein the first DRX cycle length is a product of a scaling factor and the second DRX cycle length, and the first operation state is one of an idle state or an inactive state and the second operation state is another one of the idle state or the inactive state.

Various embodiments may preferably implement the following feature:
Preferably, the wireless terminal further comprises a processor configured to perform any of aforementioned wireless communication methods.

The present disclosure relates to a first wireless network node. The first wireless network node comprises a communication unit, configured to transmitting, to a wireless terminal, a core network or a second wireless network node, a first discontinuous reception, DRX, cycle length of a first operation state of the wireless terminal and a second DRX cycle length of a second operation state of the wireless terminal, wherein the first DRX cycle length is a product of a scaling factor and the second DRX cycle length, and the first operation state is one of an idle state or an inactive state and the second operation state is another one of the idle state or the inactive state.

Various embodiments may preferably implement the following feature:
Preferably, the first wireless network node further comprises a processor configured to perform any of aforementioned wireless communication methods.

The present disclosure relates to a wireless device. The wireless device comprises a processor, configured to determine a starting point of a paging time window within a first paging hyper-frame for a wireless terminal based on a length of an extended DRX cycle, wherein the extended DRX cycle is associated with an idle state or an inactive state.

Various embodiments may preferably implement the following feature:
Preferably, the processor is further configured to perform any of aforementioned wireless communication methods.

The present disclosure relates to a wireless device. The wireless device comprises a processor, configured to determine a paging occasion for a wireless terminal based on a length of an extended DRX cycle, wherein the extended DRX cycle is associated with an idle state or an inactive state.

Various embodiments may preferably implement the following feature:
Preferably, the processor is further configured to perform any of aforementioned wireless communication methods.

The present disclosure relates to a core network node. The core network node comprises a communication unit, configured to transmit, to a wireless network node, a message which is associated with a wireless terminal and comprises a first extended discontinuous reception, DRX, cycle length for an idle state and a second extended DRX cycle length for an inactive state.

Various embodiments may preferably implement the following feature:
Preferably, the core network node further comprises a processor configured to perform any of aforementioned wireless communication methods.

The present disclosure relates to a wireless network node. The wireless network node comprises a communication unit, configured to receive, from a core network node, a message which is associated with a wireless terminal and comprises a first extended discontinuous reception, DRX, cycle length for an idle state and a second extended DRX cycle length for an inactive state.

Various embodiments may preferably implement the following feature:
Preferably, the wireless network node further comprises a processor configured to perform any of aforementioned wireless communication methods.

The present disclosure relates to a wireless network node. The wireless network node comprises a communication unit, configured to transmit, to a core network node, a message which is associated with a wireless terminal and comprises a second extended DRX cycle length for an inactive state.

Preferably, the wireless network node further comprises a processor configured to perform any of aforementioned wireless communication methods.

The present disclosure relates to a core network node. The core network node comprises a communication unit, configured to receive, from a wireless network node, a message which is associated with a wireless terminal and comprises a second extended DRX cycle length for an inactive state.

Various embodiments may preferably implement the following feature:
Preferably, the core network node further comprises a processor configured to perform any of aforementioned wireless communication methods.

The present disclosure relates to a first wireless network node. The first wireless network node comprises:
a communication unit, configured to transmit, to a second wireless network node, a message which is associated with a wireless terminal and comprises a first extended discontinuous reception, DRX, cycle length for an idle state and a second extended DRX cycle length for an inactive state.

Various embodiments may preferably implement the following feature:
Preferably, the first wireless network node further comprises a processor configured to perform any of aforementioned wireless communication methods.

The present disclosure relates to a second wireless network node. The second wireless network node comprises:
a communication unit, configured to receive, from a first wireless network node, a message which is associated with a wireless terminal and comprises a first extended discontinuous reception, DRX, cycle length for an idle state and a second extended DRX cycle length for an inactive state.

Various embodiments may preferably implement the following feature:
Preferably, the second wireless network node further comprises a processor configured to perform any of aforementioned wireless communication methods.

The present disclosure relates to a computer program product comprising a computer-readable program medium code stored thereupon, the code, when executed by a processor, causing the processor to implement a wireless communication method recited in any one of foregoing methods.

In general, the present disclosure provides a way to calculate paging hyper radio frame in NR systems when the UE is configured with extended DRX cycle larger than 10.24s.

Moreover, to supporting radio access of industrial sensors, smart wearable and video surveillance, etc., a kind of low cost and low complexity or reduced capability device is introduced on the top of 5G NR system.

The reduced capability UE can be configured with extended discontinuous reception (eDRX) cycle which may be larger than the length of one system frame number range, i.e. 10.24s. Therefore, the present disclosure provides a method related to configuration of eDRX and paging occasion determination for UE which is configured with eDRX.

The exemplary embodiments disclosed herein are directed to providing features that will become readily apparent by reference to the following description when taken in conjunction with the accompany drawings. In accordance with various embodiments, exemplary systems, methods, devices and computer program products are disclosed herein. It is understood, however, that these embodiments are presented by way of example and not limitation, and it will be apparent to those of ordinary skill in the art who read the present disclosure that various modifications to the disclosed embodiments can be made while remaining within the scope of the present disclosure.

Thus, the present disclosure is not limited to the exemplary embodiments and applications described and illustrated herein. Additionally, the specific order and/or hierarchy of steps in the methods disclosed herein are merely exemplary approaches. Based upon design preferences, the specific order or hierarchy of steps of the disclosed methods or processes can be re-arranged while remaining within the scope of the present disclosure. Thus, those of ordinary skill in the art will understand that the methods and techniques disclosed herein present various steps or acts in a sample order, and the present disclosure is not limited to the specific order or hierarchy presented unless expressly stated otherwise.

The above and other aspects and their implementations are described in greater detail in the drawings, the descriptions, and the claims.

FIG. 1 shows schematic illustration of paging occasions within a paging frame in a DRX cycle.

FIG. 2 shows paging time window within a paging hyperframe in an eDRX cycle according to an embodiment of the present disclosure.

FIG. 3 shows overlapped PH according to two different eDRX cycle lengths according to an embodiment of the present disclosure.

FIG. 4 shows an exchange of beam coverage modification information between Master Node and Secondary Node in Dual Connectivity according to an embodiment of the present disclosure.

FIG. 5 shows two POs according to an eDRX cycle for the RRC idle state and inactive, respectively, in an overlapped PF according to an embodiment of the present disclosure.

FIG. 6 shows an example of a schematic diagram of a wireless network node according to an embodiment of the present disclosure.

FIG. 7 shows an example of a schematic diagram of a wireless network node according to an embodiment of the present disclosure.

FIG. 8 shows a flowchart of a method according to an embodiment of the present disclosure.

FIG. 9 shows a flowchart of a method according to an embodiment of the present disclosure.

FIG. 10 shows a flowchart of a method according to an embodiment of the present disclosure.

FIG. 11 shows a flowchart of a method according to an embodiment of the present disclosure.

FIG. 12 shows a flowchart of a method according to an embodiment of the present disclosure.

FIG. 13 shows a flowchart of a method according to an embodiment of the present disclosure.

FIG. 14 shows a flowchart of a method according to an embodiment of the present disclosure.

FIG. 15 shows a flowchart of a method according to an embodiment of the present disclosure.

FIG. 16 shows a flowchart of a method according to an embodiment of the present disclosure.

FIG. 17 shows a flowchart of a method according to an embodiment of the present disclosure.

FIG. 18 shows a flowchart of a method according to an embodiment of the present disclosure.

FIG. 19 shows a flowchart of a method according to an embodiment of the present disclosure.

In new radio (NR), extended DRX (eDRX) mechanism is introduced to reduce UE power consumption by reducing the number of paging monitoring for UE that is in RRC IDLE or RRC INACTIVE state.

A UE operating in the eDRX may be configured with an eDRX cycle. The value of the eDRX cycle may be a number of hyper system frames. A hyper system frame includes 1024 system frames. A hyper system frame number (H-SFN) may be transmitted in a system information of a cell to indicate the current hyper system frame number.

In the eDRX mechanism, UE monitors paging occasions within a paging time window (PTW) if the eDRX cycle length is larger than 10.24s. The PTW is UE specific and is determined by a paging hyperframe (PH), a starting position within the PH (PTW_start), and an ending position (PTW_end) or length of PTW (see FIG. 2).

In the eDRX configuration, the network node (including core network (CN) node and base station (BS)) and UE will apply the eDRX configuration to determine the resource used for paging message transmission/reception.

However, how to determine PH for RedCap UEs (reduced capability UEs) when eDRX cycle length is larger than 10.24s is not clearly defined.

In an embodiment, the hyper system frame number (H-SFN) of the PH is calculated with the bits of the UE identifier (ID) other than the bits used for calculating PF and PO. In other words, the H-SFN of PH may be calculated with the bits of the UE ID that are not used for calculating PF and PO.

In some embodiments, the paging PH is determined according to the following method by the UE and the network element (including BS and CN):

The H-SFN of the PH is determined according to the eDRX cycle length and a UE ID used for PH determination. The UE ID used for PH determination is calculated based on a UE ID.

The H-SFN of the PH is determined by following formula:

$$\text{SFN mod T-eDRX} = \text{UE\_ID\_eDRX mod T-eDRX,}$$

or

$$(\text{H-SFN} + \text{offset}) \text{ mode T-eDRX} = \text{UE\_ID\_eDRX mod T-eDRX,}$$

where H-SFN is the hyper system frame number; mod is the modular operator; T-eDRX is the eDRX cycle length; offset is H-SFN offset, which is configured by the base station.

UE_ID_eDRX is used to determine PH and is determined by the following method:

$$\text{UE\_ID\_eDRX} = \text{floor}(\text{UE\_ID} / M),$$

or,

$$\text{UE\_ID\_eDRX} = (\text{UE\_ID} / M),$$

where M is an integer specified in the specification or configured by a RRC message to the UE. The value of M may be configured such that the bits for PF and PO calculation is not used for PH calculation; floor is a round down operator; UE_ID is an identifier of the UE, or part of an identifier of the UE, or the result of operation on a UE ID. The UE ID may be the 5G-S-TMSI.

In some embodiment, the H-SFN of the PH is determined by the following formula by the UE and the network element (including base station and CN):

$$H\text{-SFN} \bmod T\text{-eDRX} = \text{floor} (UE\_ID /(N*Ns)) \bmod T\text{-eDRX},$$

or

$$H\text{-SFN} \bmod T\text{-eDRX} = (UE\_ID /(N*Ns)) \bmod T\text{-eDRX},$$

or

$$SFN + \text{offset}) \bmod T\text{-eDRX} = \text{floor} (UE\_ID / (N*Ns)) \bmod T\text{-eDRX},$$

or

$$(H\text{-SFN} + \text{offset}) \bmod T\text{-eDRX} = (UE\_ID / (N*Ns)) \bmod T\text{-eDRX},$$

where offset is the H-SFN offset, which is configured by the base station; floor is a round down operator; UE_ID is an identifier of the UE, or a part of an identifier of the UE (i.e. UE ID), or the result of operation on a UE ID. The UE ID may be the 5G-S-TMSI.

In some embodiments, the PH is calculated with (e.g. based on, according to) bits of the UE ID other than the bits used for calculating paging frame (PF) and paging occasion (i_s).

When the same bits of the UE ID are used to calculate PH and PF, those UEs which calculate the same PH value will acquire the same PF value, resulting in a possible congestion. In other words, UEs that monitor the same POs in the PTW starting from the same PH may cause congestion in paging occasion monitoring. This problem can be avoided by the embodiments described herein.

In the following, PTW_start refers to the starting position of a PTW. It is located within the PH.

In an embodiment, the SFN of PTW_start is calculated with the bits of the UE ID other than the bits used for calculating PH, PF and PO by UE and network element (including base station and CN).

In an embodiment, the SFN of PTW _start satisfies the following formula:

$$SFN = K1* i_{eDRX},$$

where

$$- i_{eDRX} = \text{floor} (UE\_ID /(N*Ns*T\text{-eDRX})) \bmod K2,$$

or

$$- i_{eDRX} = \text{floor} ( \text{floor}(UE\_ID /(N*Ns)) / T\text{-eDRX}) \bmod K2,$$

or

$$- i_{eDRX} = \text{floor}(UE\_ID /(N*Ns*T\text{-eDRX})) \bmod K2,$$

or

$$- i_{eDRX} = (UE\_ID /(N*Ns*T\text{-eDRX}) \bmod K2,$$

where K1 and K2 are integers.

In some embodiments, K2 = 1024 / K1.

In some embodiments, K1 and K2 are defined in the specification.

In some embodiments, K1 or K2 is configured by the network node and indicated to the UE by a RRC message.

The UE_ID is an UE ID, or a part of an UE ID, or the result of an operation on an UE ID. The UE ID may be 5G-S-TMSI.

In accordance with embodiments, the UE may be further uniformly distributed by avoiding congestion due to the use of the same bits for calculating PTW_start as the bits for PH, PH or PO.

In the NR RedCap, the eDRX mechanism is introduced for a UE in both the RRC idle state and RRC inactive state. Separate configurations may be configured for these two RRC state, i.e. one set of eDRX configuration is used for a UE in the RRC idle state and another set of eDRX configuration is used for a UE in RRC inactive state.

The UE in the RRC inactive state may monitor both paging messages from the CN (CN paging) and paging messages initiated from the BS (RAN paging). The CN paging is transmitted according to the eDRX configuration for the UE in the RRC idle state, and the RAN paging is transmitted according to the eDRX configuration for the UE in the RRC inactive state. In case of a RRC state mismatch between UE and the network, the UE in RRC inactive state may monitor paging occasions for both the RAN paging and the CN paging.

The eDRX cycle length for RRC idle state and RRC inactive state may be different. The eDRX cycle length may be 5.12s, 10.24s, 2 hyper system frames, 4 hyper system frames, 6 hyper system frames, 8 hyper system frames, ..., etc.

From a UE power saving point of view, it is beneficial to overlap the PTW for the RRC idle state and that for the RRC inactive state as much as possible. That is, whenever there is a PH according to the longer eDRX cycle, there is also PH according to the shorter eDRX cycle on the same time and/or frequency resource.

In an embodiment, to ensure the PTW for the RRC idle state and the PTW for the RRC inactive state having the same PH, the network configured the eDRX cycle for the RRC idle state and the eDRX cycle for the RRC inactive state are provided in one of following manners:

- the eDRX cycle length for the RRC idle state is an integer multiple of the eDRX cycle length for the RRC inactive state;
- the eDRX cycle length for the RRC inactive state is an integer multiple of the eDRX cycle length for RRC idle state;
- the eDRX cycle length for the RRC idle state is a sub-multiple or a factor of the eDRX cycle length for RRC inactive state; or
- the eDRX cycle length for the RRC inactive state is a sub-multiple or a factor of the eDRX cycle length for the RRC idle state.

More specifically, in various cases, the eDRX cycle lengths for the RRC idle state and for the RRC inactive state are transmitted between the CN node, the BS and the UE. For example, the CN node may transmit the eDRX cycle lengths for the RRC idle state and for the RRC inactive state to the BS in a paging message which is used to page a UE in one or several tracking areas. The CN node may transmit the eDRX cycle lengths for the RRC idle state and RRC inactive state to the BS in an UE context setup request message or UE context modification request message. The BS may transmit the eDRX cycle for the RRC inactive state to the UE in an RRC release message. The base station may transmit the eDRX cycle length to the CN node.

In some embodiments, in the cases mentioned above, the eDRX cycle length for the RRC inactive state is indicated as a scaling factor of the eDRX cycle length for the RRC idle state.

In some embodiments, the eDRX cycle length for the RRC idle state is indicated as a scaling factor of eDRX cycle for the RRC inactive state. For example, the eDRX cycle length for the RRC inactive state is indicated as n or 1/n times of eDRX cycle length for the RRC idle (i.e. eDRX cycle length for RRC inactive state = n * eDRX cycle length for RRC idle state or eDRX cycle length for $RRC\ inactive\ state = \frac{1}{n} * eDRX$ cycle length for RRC idle state), where n is an positive integer.

In accordance with the embodiments described herein, the PH calculated according to the eDRX cycle for the RRC idle state and for the RRC inactive state are overlapping as much as possible.

For example, when eDRX cycle length for the RRC inactive state equals 2 hyper system frames, and eDRX cycle for RRC idle equals 6 hyper system frames. The PH calculated for a UE may be:

- for RRC inactive state: the H-SFN of PH = 0, 2, 4, 6, 8, 10, 12 hyper system frames
- for RRC idle state: the H-SFH of PH = 0, 6, 12 hyper system frames

Then the PH for the RRC idle state and the RRC inactive state overlaps in the H-SFN equals to 0, 6, 12 hyper system frames

FIG. 3 illustrates an overlapped PH according to two different eDRX cycle lengths, wherein the shorter eDRX cycle is shown above the longer eDRX cycle.

In an embodiment, the eDRX cycle length is used to calculate the PH. Thus, if the eDRX cycles for the RRC idle state and RRC inactive state are different, the PH values may be different. However, with the embodiments provided above, the PH for the RRC idle state and RRC inactive state may overlap as much as possible, i.e. when a H-SFN is the PH for a lager eDRX cycle, it is also the PH for the smaller eDRX cycle.

In calculating the PTW_start, the eDRX cycle length may also be used as a parameter. In some embodiments, the eDRX cycle length act as an divisor in calculating PTW_start.

For example, with reference to the above embodiments:

$$SFN = K1 * i_{eDRX},$$

where

$$- i_{eDRX} = floor\ (UE\_ID\ /\ (N*Ns*T\text{-}eDRX))\ mod\ K2,$$

the $i_{eDRX}$ calculated based on the eDRX cycles for the RRC idle state and RRC inactive state may be different if these two eDRX cycles are different.

Thus, for the same UE ID, if the eDRX cycle lengths for the RRC idle state and RRC inactive state are different, there may be two different values of PTW_start due to the different eDRX cycle lengths. That is, in the same PH, the UE may monitor paging in two different time windows. Under such condition, additional monitoring may consume more power and be unnecessary.

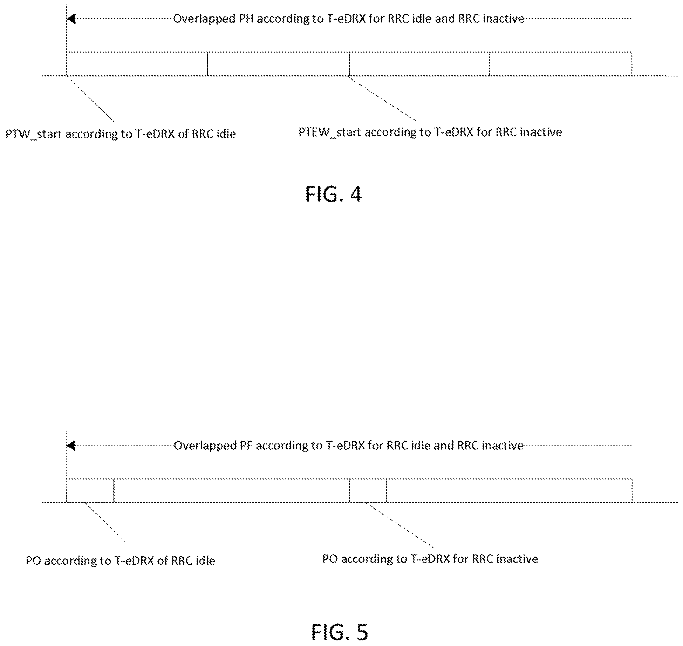

FIG. 4 shows an example of two PTW_start in overlapped PH for the eDRX cycle of the RRC idle state and the RRC inactive state, respectively.

In an embodiment, the UE and the network element use one of the eDRX cycle lengths to determine the PTW_start.

Here, one of following method may be used to determine the eDRX cycle length in calculating PTW_start:

1. The smallest (shortest) value of the eDRX cycle length for the RRC inactive state and the eDRX cycle length for the RRC idle state.
2. The largest (longest) value of the eDRX cycle length for the RRC inactive state and the eDRX cycle length for the RRC idle state.
3. Use the eDRX cycle length for the RRC inactive state.
4. Use the eDRX cycle length for the RRC idle state.
5. In the case the PH calculated according to the eDRX cycle length for the RRC idle state and the RRC inactive state overlaps, one of following is used for calculating PTW_start: the eDRX cycle length for the RRC idle state, the eDRX cycle length for RRC inactive state, or the shortest one of the eDRX cycle lengths for the RRC idle state and the RRC inactive state, or the largest one of the eDRX cycle length for the RRC idle state and the RRC inactive state.
6. In case the PH is calculated according to the eDRX cycle for the RRC idle state, the eDRX cycle for the RRC idle state is used for the PTW_start calculation and the corresponding PTW is used for both the RAN paging and the CN paging. That is, when the PH according to the eDRX cycle for the RRC idle state and the RRC inactive state overlaps, the eDRX configuration for the RRC idle state is always used for the CN paging and the RAN paging monitoring.

In some embodiments, the PTW_start is determined according to following rule.

The PTW_start is determined by choosing one of two inter-mediate PTW_start values. One is calculated using the eDRX cycle length for the RRC idle state and another one is calculated by using the eDRX cycle length for the RRC inactive state.

The PTW_start is determined by one of following methods:

1. The smallest value of the two inter-mediate PTW_start values.
2. The largest value of the two inter-mediate PTW_start values.

In addition, in the case if the PTW lengths for the RRC idle state and the RRC inactive state differs, the PTW length for the RRC idle state, or the longest PTW length, or the PTW length for the RRC inactive state is used in the scenario described above.

In some embodiments, one of following is used for PH calculation:

1. The shortest value of the eDRX cycle for the RRC idle state and the eDRX cycle for RRC inactive state.
2. The eDRX cycle for the RRC inactive state (assuming the eDRX cycle for the RRC inactive state is no larger than the eDRX cycle for the RRC idle state)

Thus, when the eDRX cycle for the RRC idle state and the RRC inactive state are both larger than 10.24s, i.e. PTW mechanism is applied for these two eDRX configurations, the UE always applies one of these two eDRX cycles for the PH calculation. Because the eDRX cycle for the RRC inactive/idle state is configured as an integer multiple of eDRX cycle for the RRC idle/inactive state, the PH according to the longer eDRX cycle will always overlap a PH according to the shorter eDRX cycle. Then the PH according to the shortest eDRX cycle will include the PH calculated according to the longer eDRX cycle.

In accordance with the forgoing embodiments, a single PTW_start may be used when PH for the RRC idle state and RRC inactive overlaps. In this case, CN paging and RAN paging messages are transmitted/monitored in the PTW start from the same PTW_start. Thus, the PTW for CN paging and RAN paging will overlap as much as possible.

In an embodiment, eDRX for the RRC idle state is used in the case PH overlaps. In the case when UE is in the RRC idle state while the network thinks the UE is in RRC inactive, according to an embodiment, the network may transmit a paging message according to eDRX configuration for the RRC idle state. Thus, the UE may not miss the paging message. Otherwise, if the network transmits a paging message according to eDRX configuration for the RRC inactive state, but the UE has no eDRX configuration for RRC inactive since it has transited to the RRC idle state, it may miss the paging message.

When the eDRX cycle is equal to or smaller than 10.24s, the eDRX cycle length may be used as T to calculate PF and PO. However, when the UE is configured with eDRX for both the the RRC idle state and the RRC inactive state and if both the eDRX cycle length for the RRC idle state and RRC inactive are smaller or equal to 10.24s, there may be two results of PF and PO. Accordingly, the PF and PO may not be overlapped due to different eDRX cycle length when this method is used for PF and PO calculation.

FIG. 5 shows an example of two POs according to the eDRX cycle for the RRC idle state and inactive, respectively, in an overlapped PF.

From UE power saving point of view, this situation may not be UE power efficient and unnecessary.

Therefore, the UE and the network may use one of follow value as the T to calculate PF and PO, in accordance with some embodiments:

1. The smallest (shortest) value of the eDRX cycle length for RRC inactive and eDRX cycle length for the RRC idle state.
2. The largest (longest) value of the eDRX cycle length for RRC inactive and the eDRX cycle length for the RRC idle state.
3. Always use the eDRX cycle for the RRC inactive state.
4. Always use the eDRX cycle for the the RRC idle state.
5. In case the PF is calculated according to the eDRX cycle length for the RRC idle state, the eDRX cycle length for the RRC idle state is used for calculating PO for both CN paging and RAN paging monitoring.
6. In case the PF calculated according to the eDRX cycle length for the RRC idle state and RRC inactive overlaps, one of following is used for calculating PO for both CN paging and RAN paging: the eDRX cycle length for the RRC idle state, or the eDRX cycle length, or the shortest of the eDRX cycle length for the RRC idle state and RRC inactive, the largest of the eDRX cycle length for the RRC idle state and the RRC inactive state.

In some embodiments, one of following is used for PF calculation:

1. The shortest value of the eDRX cycle for the RRC idle state and the eDRX cycle for RRC inactive.
2. The eDRX cycle for RRC inactive (assuming the eDRX cycle for RRC inactive is no larger than the eDRX cycle for the RRC idle state).

Thus, when the eDRX cycle for the RRC idle state and RRC inactive are both shorter or equal to 10.24s, i.e. no PTW mechanism is applied for these two eDRX configurations, the UE always applies one of these two eDRX cycles for PF calculation. Because the eDRX cycle for RRC inactive/idle is configured as an integer multiple of the eDRX cycle for the RRC idle state/inactive, the PF according to the longer eDRX cycle will always overlap a PF according to the shorter eDRX cycle. Then PF according to the shortest eDRX cycle will include the PH calculated according to the longer eDRX cycle.

In some embodiments, the formula of the current specification is used to calculate PF and PO:

SFN for the PF is determined by:

$$(\text{SFN} + \text{PF\_offset}) \bmod T = (T \text{ div } N)*(\text{UE\_ID} \bmod N),$$

where index (i_s) indicating the index of the paging occasion (PO) is determined by:

$$i\_s = \text{floor } (\text{UE\_ID}/N) \bmod Ns,$$

where the meaning of SFN, PF_offset, PF, i_s, UE_ID, N, Ns are defined in the current specification.

N may be configured by the base station, and may be defined as one of following values: T, T/2, T/4, T/8, T/16.

In an embodiment, the UE and the network use one of the methods provided in the foregoing embodiments to determine T and then the specific value of N.

For example, the eDRX cycle length for RRC inactive is 512 SFN, the eDRX cycle length for the RRC idle state is 1024 SFN. N is configured as T/16.

Then the PF calculated according to T=512 SFN and T=1024 SFN will overlap in some PFs. However, in the overlapped PF, the PO calculated according to T=512 SFN and 1024 SFN differs, because according to the formula for calculating PO, the parameter T is different for these two cases.

By applying one of the methods, only one PO is applied for paging monitoring in the overlapped PF. For example, choose T=1024 SFN (choose the eDRX cycle for the RRC idle state).

In accordance with the above embodiments, the PF and PO for CN paging and RAN paging are overlapped. The situation that different PF and PO for CN paging and RAN paging is avoided. Thus, UE power efficiency is improved.

In an embodiment, the eDRX for the RRC idle state is used in the case PF overlaps. In the case when the UE is in the RRC idle state while the network thinks the UE is in RRC inactive, the network may transmit a paging message according the eDRX configuration for the RRC idle state. Thus, the UE may not miss the paging message. Otherwise, if the network transmits a paging message according to the eDRX configuration for RRC inactive state, but the UE has no eDRX configuration for the RRC inactive state since it has transited to the RRC idle state, it may miss the paging message.

In some embodiments, the base station and the CN node may require knowing the eDRX cycle length for both the RRC idle state and RRC inactive. Especially for the base station when it calculates PTW_start or paging occasion for a UE in the RRC inactive state.

In the case that the eDRX cycle length for both the RRC idle state and the RRC inactive state are decided and configured by the CN node, the CN node transmits the eDRX cycle lengths for both the RRC idle state and RRC inactive to the base station in one of the following messages:

1. In the message to setup the UE context in the base station.
2. In a message to modify the UE context in the base station.

In the case that the eDRX cycle length for the RRC inactive state is decided by the base station, the base station transmits the eDRX cycle length for the RRC inactive state to the CN node in one of the following messages:

1. In the message to inform the CN node that the UE enters or leaves the RRC inactive state when the UE RRC state changes.
2. In a message used to negotiate the eDRX cycle for the RRC inactive state between the CN node and the base station.

Thus, the CN node knows the eDRX cycle length in this case.

In the case that the CN node initiates a paging message to page the UE within an area, it transmits the eDRX cycle length for the RRC inactive and the RRC idle state to a base station in the paging message. Thus, the base station, which has no UE context, knows the eDRX cycle length for both the RRC idle state and RRC inactive.

In the case that the base station initiates a RAN level paging for paging a UE in the RRC inactive state, it transmits the eDRX cycle for the RRC idle state and RRC inactive to a neighbor base station. Thus, the neighbor base station, which has no UE's context, knows the eDRX cycle length for the RRC idle state and RRC inactive.

With the methods provided above, the base station which transmits a paging message to the UE may get the eDRX cycle length for the RRC idle state and RRC inactive of the UE.

In accordance with some embodiments for determining PH and PTW_start, UE-ID/(N*Ns) is used in the respective formula to avoid the same bits of UE-ID being used for PH/PTW_start determination, which are used for PF and PO.

In accordance with some embodiments, methods are provided of how to configure the eDRX cycle for the RRC idle state (or the RRC inactive state) as an integer multiple of that for the RRC inactive state (or the RRC idle state), i.e. to configure the eDRX cycle for the RRC inactive state as a scaling factor of the RRC idle state.

In accordance with some embodiments, a method to choose which eDRX cycle length is used to determine PTW_start or PO when the eDRX cycle for the RRC idle state and RRC inactive are different.

In accordance with some embodiments, UE context setup/modification messages are provided, which include the eDRX cycle for inactive and for idle to inform the base station accordingly. If the eDRX cycle for the RRC inactive state is determined by the base station, the base station may inform the CN when the UE transits to RRC inactive state. The base station may transmit the eDRX cycle for the RRC idle state and inactive to a neighbor base station upon RAN level paging.

The CN node transits the eDRX cycle for the RRC idle state upon UE context setup/modification.

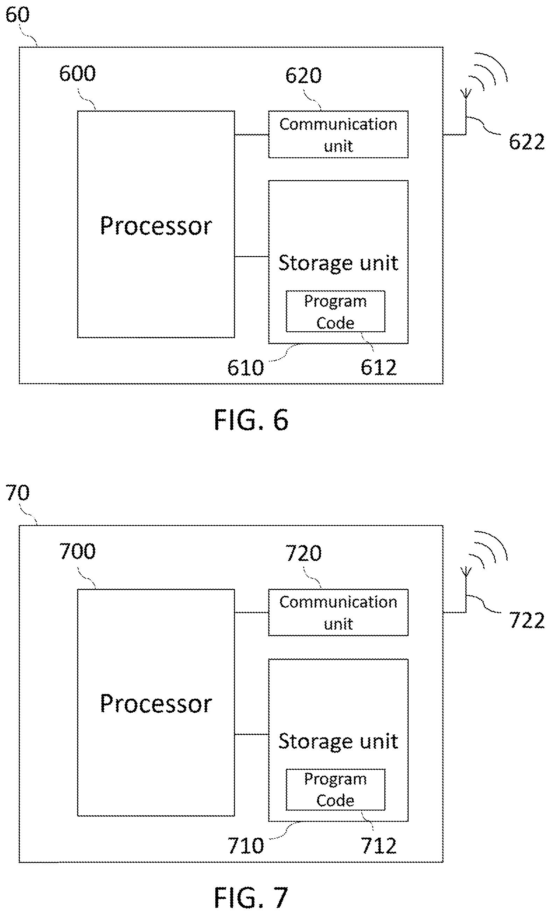

FIG. 6 relates to a schematic diagram of a wireless terminal 60 according to an embodiment of the present disclosure. The wireless terminal 60 may be a user equipment (UE), a mobile phone, a laptop, a tablet computer, an electronic book or a portable computer system and is not limited herein. The wireless terminal 60 may include a processor 600 such as a microprocessor or Application Specific Integrated Circuit (ASIC), a storage unit 610 and a communication unit 620. The storage unit 610 may be any data storage device that stores a program code 612, which is accessed and executed by the processor 600. Embodiments of the storage unit 612 include but are not limited to a subscriber identity module (SIM), read-only memory (ROM), flash memory, random-access memory (RAM), hard-disk, and optical data storage device. The communication unit 620 may a transceiver and is used to transmit and receive signals (e.g. messages or packets) according to processing results of the processor 600. In an embodiment, the communication unit 620 transmits and receives the signals via at least one antenna 622 shown in FIG. 6.

In an embodiment, the storage unit 610 and the program code 612 may be omitted and the processor 600 may include a storage unit with stored program code.

The processor 600 may implement any one of the steps in exemplified embodiments on the wireless terminal 60, e.g., by executing the program code 612.

The communication unit 620 may be a transceiver. The communication unit 620 may as an alternative or in addition be combining a transmitting unit and a receiving unit configured to transmit and to receive, respectively, signals to and from a wireless network node (e.g. a base station).

FIG. 7 relates to a schematic diagram of a wireless network node 70 according to an embodiment of the present disclosure. The wireless network node 70 may be a satellite, a base station (BS), a network entity, a Mobility Management Entity (MME), Serving Gateway (S-GW), Packet Data Network (PDN) Gateway (P-GW), a radio access network (RAN) node, a next generation RAN (NG-RAN) node, a gNB, an eNB, a gNB central unit (gNB-CU), a gNB distributed unit (gNB-DU), a gNB-CU-CP (control plane), a gNB-CU-UP (user plane), a data network, a core network or a Radio Network Controller (RNC), and is not limited herein. In addition, the wireless network node 70 may comprise (perform) at least one network function such as an access and mobility management function (AMF), a session management function (SMF), a user place function (UPF), a policy control function (PCF), an application function (AF), etc. The wireless network node 70 may include a processor 700 such as a microprocessor or ASIC, a storage unit 710 and a communication unit 720. The storage unit 710 may be any data storage device that stores a program code 712, which is accessed and executed by the processor 700. Examples of the storage unit 712 include but are not limited to a SIM, ROM, flash memory, RAM, hard-disk, and optical data storage device. The communication unit 720 may be a transceiver and is used to transmit and receive signals (e.g. messages or packets) according to processing results of the processor 700. In an example, the communication unit 720 transmits and receives the signals via at least one antenna 722 shown in FIG. 7.

In an embodiment, the storage unit 710 and the program code 712 may be omitted. The processor 700 may include a storage unit with stored program code.

The processor 700 may implement any steps described in exemplified embodiments on the wireless network node 70, e.g., via executing the program code 712.

The communication unit 720 may be a transceiver. The communication unit 720 may as an alternative or in addition be combining a transmitting unit and a receiving unit configured to transmit and to receive, respectively, signals to and from a wireless terminal (e.g. a user equipment or another wireless network node).

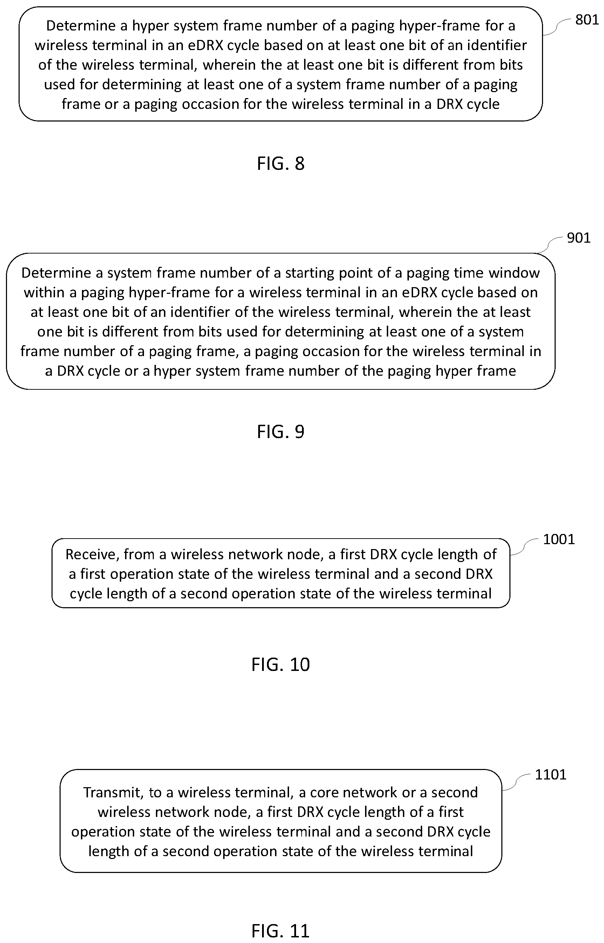

FIG. 8 shows a flowchart of a method according to an embodiment of the present disclosure. The method shown in FIG. 8 may be used in a wireless device (e.g. UE, CN node or BS) and comprises the following step:

Step 801: Determine a hyper system frame number of a paging hyper-frame for a wireless terminal in an eDRX cycle based on at least one bit of an identifier of the wireless terminal, wherein the at least one bit is different from bits used for determining at least one of a system frame number of a paging frame or a paging occasion for the wireless terminal in a DRX cycle.

In FIG. 8, the wireless device determines a hyper system frame number of a paging hyper-frame for a wireless terminal (i.e. UE) based on at least one bit of an identifier of the wireless terminal. Note that, the at least one bit of an identifier of the wireless terminal used for determining the hyper system frame number is different from that (those) used for determining a SFN of a PF and/or PO in a DRX cycle. That is, the bit(s) used for determining the SFN of a PF and/or PO is not used for determining the hyper system frame number.

In an embodiment, a length of the eDRX cycle is greater than a length of the DRX cycle.

In an embodiment, a length of the extended DRX cycle is greater than or equal to 10.24 seconds.

In an embodiment, the hyper system frame number is determined by:

$$\text{H-SFN mod T-eDRX} = \text{UE\_ID\_eDRX mod T-eDRX},$$

or

$$(\text{H-SFN} + \text{offset}) \bmod \text{T-eDRX} = \text{UE\_ID\_eDRX} \bmod \text{T-eDRX},$$

wherein: H-SFN is the hyper system frame number, mod is a modular operator, T-eDRX is a length of the extended DRX cycle, offset is a H-SFN offset, and UE_ID_eDRX is the at least one bit and is determined by:

$$\text{UE\_ID\_eDRX} = \text{floor } (\text{UE\_ID}/M),$$

or

$$\text{UE\_ID\_eDRX} = (\text{UE\_ID} / M),$$

wherein: floor () is a floor function, UE_ID is the identifier of the wireless terminal, and M is an integer configured by a higher layer signaling or predefined.

In an embodiment, the hyper system frame number is determined by:

$$\text{H-SFN} \bmod \text{T-eDRX} = \text{UE\_ID\_eDRX} \bmod \text{T-eDRX},$$

or

$$(\text{H-SFN} + \text{offset}) \bmod \text{T-eDRX} = \text{UE\_ID\_eDRX} \bmod \text{T-eDRX},$$

wherein: H-SFN is the hyper system frame number, mod is a modular operator, T-eDRX is a length of the extended DRX cycle, offset is a H-SFN offset, and UE_ID_eDRX is the at least one bit and is determined by:

$$\text{UE\_ID\_eDRX} = \text{floor } (\text{UE\_ID}/(N^*Ns)),$$

or

$$\text{UE\_ID\_eDRX} = (\text{UE\_ID} / (N^*Ns)),$$

wherein: floor () is a floor function, UE_ID is the identifier of the wireless terminal, N is number of paging frames in a second DRX cycle, and Ns is number of paging occasions for a paging frame.

In an embodiment, (a length of) the second DRX cycle is determined by the shortest one of the specific DRX value(s) (e.g. cycles) assigned to (configured for) the wireless terminal. For example, the length T the second DRX cycle may refer to may be used for determining the SFN of the PF.

In an embodiment, the second DRX cycle may be the eDRX cycle of the RRC idle state or the RRC inactive state.

FIG. 9 shows a flowchart of a method according to an embodiment of the present disclosure. The method shown in FIG. 9 may be used in a wireless device (e.g. UE, CN node or BS) and comprises the following step:

Step 901: Determine a system frame number of a starting point of a paging time window within a paging hyper-frame for a wireless terminal in an eDRX cycle based on at least one bit of an identifier of the wireless terminal, wherein the at least one bit is different from bits used for determining at least one of a system frame number of a paging frame, a paging occasion for the wireless terminal in a DRX cycle or a hyper system frame number of the paging hyper frame.

In FIG. 9, the wireless device determines an SFN of a starting point (e.g. PWT_start) of a PWT within a paging hyper-frame for a wireless terminal in an eDRX cycle based on at least one bit of an identifier of the wireless terminal. Note that, the at least one bit used for determining the SFN of the starting point is different from that (those) used for determining a SFN of a PF and/or PO and/or hyper system frame number of the paging hyper frame. That is, the bit(s) used for determining a SFN of a PF and/or PO and/or hyper system frame number of the paging hyper frame is not used for determining the system frame number of the starting point.

In an embodiment, the system frame number of the start point of the paging time window is determined by:

$$\text{SFN} = K1^* i_{\text{eDRX}},$$

wherein, SFN is the system frame number of the start point, K1 is an integer, and $i_{\text{eDRX}}$ is determined by at least one of

following:

$$i_{eDRX} = \text{floor} \, (UE\_ID \, /(N*Ns*T\text{-}eDRX))\text{mod} \, K2,$$

$$i_{eDRX} = \text{floor} \, (\text{floor} \, (UE\_ID \, /(N*Ns)) \, / \, T\text{-}eDRX) \, \text{mod} \, K2,$$

$$i_{eDRX} = \text{floor} \, (UE\_ID \, /(N*Ns*T\text{-}eDRX)) \, \text{mod} \, K2,$$

or

$$i_{eDRX} = (UE\_ID \, /(N*Ns*T\text{-}eDRX) \, \text{mod} \, K2,$$

wherein K2 is an integer, UE_ID is the identifier of the wireless terminal, N is number of paging frames in a second DRX cycle, Ns is number of paging occasions for a paging frame, and T-eDRX is a length of the extended DRX cycle.

In an embodiment, (a length of) the second DRX cycle is determined by the shortest one in specific DRX value(s) (e.g. cycles) assigned to (configured for) the wireless terminal. For example, (the length T) the second DRX cycle may refer to may be used for determining the SFN of the PF.

In an embodiment, the second DRX cycle may be the eDRX cycle of the RRC idle state or the RRC inactive state. In an embodiment, K2 = 1024/K1. As an alternative, K1 and K2 are predefined or configured by a higher layer signaling (e.g. RRC message).

FIG. 10 shows a flowchart of a method according to an embodiment of the present disclosure. The method shown in FIG. 10 may be used in a wireless terminal (e.g. UE) and comprises the following step:
Step 1001: Receive, from a wireless network node, a first DRX cycle length of a first operation state of the wireless terminal and a second DRX cycle length of a second operation state of the wireless terminal.

In this embodiment, the wireless terminal receives a first DRX cycle length of a first operation state of the wireless terminal and a second DRX cycle length of a second operation state of the wireless terminal from a wireless network node. The first DRX cycle length is a product of a scaling factor and the second DRX cycle length. Furthermore, the first operation state is one of an (RRC) idle state or an (RRC) inactive state and the second operation state is another one of the (RRC) idle state or the (RRC) inactive state.

In an embodiment, the scaling factor is n or 1/n, wherein n is a positive integer.

FIG. 11 shows a flowchart of a method according to an embodiment of the present disclosure. The method shown in FIG. 11 may be used in a first wireless network node (e.g. BS) and comprises the following step:
Step 1101: Transmit, to a wireless terminal, a core network or a second wireless network node, a first DRX cycle length of a first operation state of the wireless terminal and a second DRX cycle length of a second operation state of the wireless terminal.

In this embodiment, the first wireless network node transmits a first DRX cycle length of a first operation state of the wireless terminal and a second DRX cycle length of a second operation state of the wireless terminal to the wireless terminal and/or a core network and/or a second wireless network node (i.e. another BS). Note that, the first DRX cycle length is a product of a scaling factor and the second DRX cycle length. In addition, the first operation state is one of an (RRC) idle state or an (RRC) inactive state and the second operation state is another one of the (RRC) idle state or the (RRC) inactive state.

In an embodiment, the scaling factor is n or 1/n, wherein n is a positive integer.

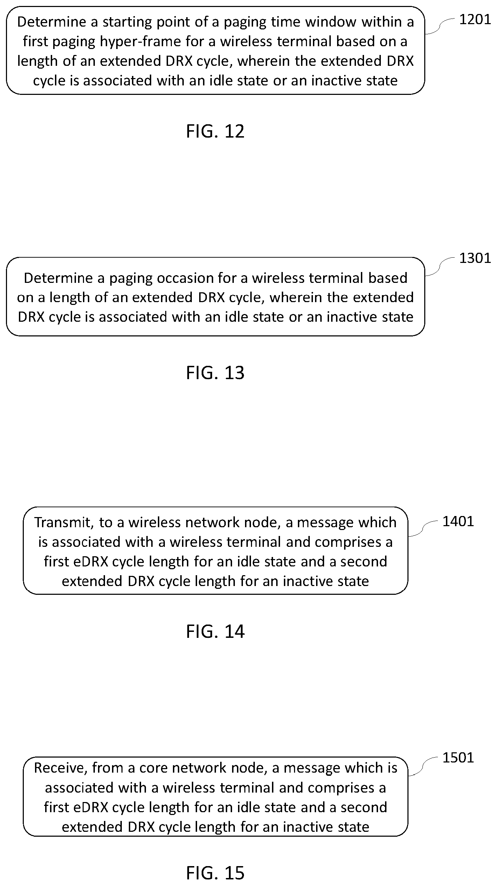

FIG. 12 shows a flowchart of a method according to an embodiment of the present disclosure. The method shown in FIG. 12 may be used in a wireless device (e.g. UE, CN node or BS) and comprises the following step:
Step 1201: Determine a starting point of a paging time window within a first paging hyper-frame for a wireless terminal based on a length of an extended DRX cycle, wherein the extended DRX cycle is associated with an idle state or an inactive state.

In this embodiment, the wireless device determines a starting point of a paging time window (e.g. PTW_start) within a first paging hyper-frame for a wireless terminal based on a length of an extended DRX cycle. Note that, the extended DRX cycle is associated with an (RRC) idle state or an (RRC) inactive state.

In an embodiment, the paging time window is used for monitoring CN paging and/or RAN paging. For example, the paging time window may comprise the paging (information) from the CN node or from BS (e.g. RAN node).

In an embodiment, the extended DRX cycle length used for determining the starting point may be a shorter one (e.g. the shortest one) between the extended DRX cycle length of the (RRC) idle state or the extended DRX cycle length of the (RRC) inactive state. For example, when the extended DRX cycle length associated with the (RRC) inactive state is shorter than or equal to the extended DRX cycle length associated with the (RRC) idle state and the extended DRX cycle is associated with the inactive state. As an alternative, when the extended DRX cycle length associated with the (RRC) idle state is shorter than or equal to the extended DRX cycle length associated with the (RRC) inactive state and the extended DRX cycle is associated with the idle state.

In an embodiment, the extended DRX cycle length used for determining the starting point may be a longer one (e.g. the longest one) between the extended DRX cycle length of the (RRC) idle state or the extended DRX cycle length of the (RRC) inactive state. For example, when the extended DRX cycle length associated with the (RRC) inactive state is longer than or equal to the extended DRX cycle length associated with the (RRC) idle state and the extended DRX cycle is associated with the inactive state. As an alternative, when the extended DRX cycle length associated with the (RRC) idle state is longer than or equal to the extended DRX cycle length associated with the (RRC) inactive state and the extended DRX cycle is associated with the idle state.

In an embodiment, the first paging hyper-frame within a first extended DRX cycle overlaps a second paging hyper-frame within a second extended DRX cycle. In this embodiment, the first extended DRX cycle is associated with one of the idle state or the inactive state and the second extended DRX cycle is associated with another one of the idle state or the inactive state.

In an embodiment, the wireless device is configured with an extended DRX cycle for the idle state and another extended DRX cycle for the inactive state.

In an embodiment, the first paging hyper-frame is associated with a first extended DRX cycle, wherein the first extended DRX cycle is associated with the inactive state, or the shorter one between the extended DRX cycle for the inactive state and the extended DRX cycle for the idle state.

In an embodiment, each of the extended DRX cycle length associated with the idle state and the extended DRX cycle length associated with the inactive state is longer than 10.24 seconds.

FIG. 13 shows a flowchart of a method according to an embodiment of the present disclosure. The method shown in FIG. 13 may be used in a wireless device (e.g. UE, CN node or BS) and comprises the following step:

Step 1301: Determine a paging occasion for a wireless terminal based on a length of an extended DRX cycle, wherein the extended DRX cycle is associated with an idle state or an inactive state.

In FIG. 13, the wireless device determines (e.g. a time location of) a PO for a wireless terminal based on a length of an extended DRX cycle. Note that, the extended DRX cycle is associated with an (RRC) idle state or an (RRC) inactive state.

In an embodiment, the paging occasion is configured to monitor a paging from a core network and/or from a wireless network node.

In an embodiment, the extended DRX cycle length used for determining the PO may be a shorter one (e.g. the shortest one) between the extended DRX cycle length of the (RRC) idle state or the extended DRX cycle length of the (RRC) inactive state. For example, when the extended DRX cycle length associated with the (RRC) inactive state is shorter than or equal to the extended DRX cycle length associated with the (RRC) idle state and the extended DRX cycle is associated with the inactive state. As an alternative, when the extended DRX cycle length associated with the (RRC) idle state is shorter than or equal to the extended DRX cycle length associated with the (RRC) inactive state and the extended DRX cycle is associated with the idle state.

In an embodiment, the extended DRX cycle length used for determining the PO may be a longer one (e.g. the longest one) between the extended DRX cycle length of the (RRC) idle state or the extended DRX cycle length of the (RRC) inactive state. For example, when the extended DRX cycle length associated with the (RRC) inactive state is longer than or equal to the extended DRX cycle length associated with the (RRC) idle state and the extended DRX cycle is associated with the inactive state. As an alternative, when the extended DRX cycle length associated with the (RRC) idle state is longer than or equal to the extended DRX cycle length associated with the (RRC) inactive state and the extended DRX cycle is associated with the idle state.

In an embodiment, the extended DRX cycle is associated with the idle state. In this embodiment, a first PO associated with the idle state and a second PO associated with the inactive state are determined based on the length of the extended DRX cycle associated with the idle state.

In an embodiment, a first paging frame comprising the PO in a first DRX cycle overlaps a second paging frame comprising the PO in a second DRX cycle. In this embodiment, the first DRX cycle is associated with one of the idle state or the inactive state and the second DRX cycle is associated with another one of the idle state or the inactive state.

In an embodiment, the extended DRX cycle length associated with the idle state and the extended DRX cycle length associated with the inactive state are shorter than or equal to 10.24 seconds.

FIG. 14 shows a flowchart of a method according to an embodiment of the present disclosure. The method shown in FIG. 14 may be used in a CN node and comprises the following step:

Step 1401: Transmit, to a wireless network node, a message which is associated with a wireless terminal and comprises a first eDRX cycle length for an idle state and a second extended DRX cycle length for an inactive state.

In FIG. 14, the CN node transmits (e.g. notifies) both a first eDRX cycle length for an idle state and a second extended DRX cycle length for an inactive state to a wireless network node (e.g. BS). The first eDRX cycle length and the second extended DRX cycle length configured for a wireless terminal are transmitted in a message. For example, the message is associated with one of: a setup of wireless terminal context of the wireless terminal, a modification of wireless terminal context of the wireless terminal, or a paging message.

FIG. 15 shows a flowchart of a method according to an embodiment of the present disclosure. The method shown in FIG. 15 may be used in a wireless network node and comprises the following step:

Step 1501: Receive, from a core network node, a message which is associated with a wireless terminal and comprises a first eDRX cycle length for an idle state and a second extended DRX cycle length for an inactive state.

In FIG. 15, the wireless network node receives both a first eDRX cycle length for an idle state and a second extended DRX cycle length for an inactive state from a CN node. The first eDRX cycle length and the second extended DRX cycle length configured for a wireless terminal are received in a message. For example, the message is associated with one of: a setup of wireless terminal context of the wireless terminal, a modification of wireless terminal context of the wireless terminal, or a paging message.

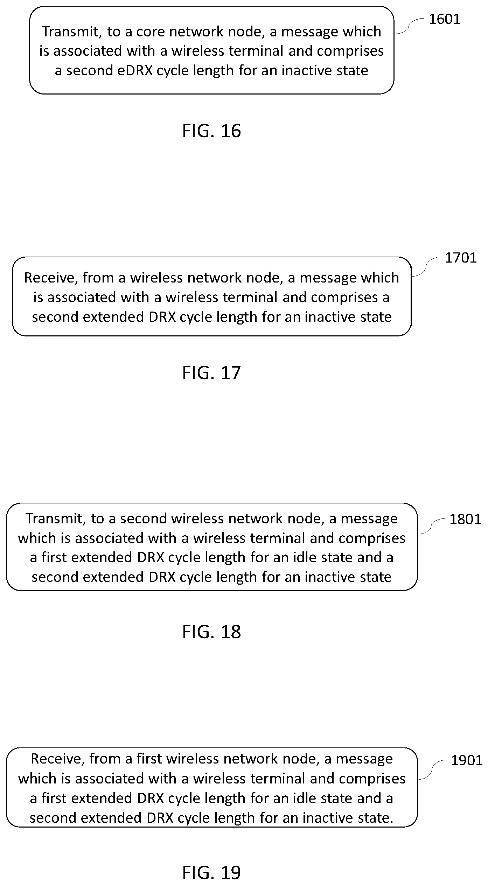

FIG. 16 shows a flowchart of a method according to an embodiment of the present disclosure. The method shown in FIG. 16 may be used in a wireless network node (e.g. BS) and comprises the following step:

Step 1601: Transmit, to a core network node, a message which is associated with a wireless terminal and comprises a second eDRX cycle length for an inactive state.

In FIG. 16, the wireless network node transmits a second eDRX cycle length for an inactive state to the CN node. The second eDRX cycle length associated with a wireless terminal is transmitted in a message. In an embodiment, the message is associated with one of: the wireless terminal entering or leaving the inactive state, or negotiating the second extended DRX cycle length for the inactive state.

FIG. 17 shows a flowchart of a method according to an embodiment of the present disclosure. The method shown in FIG. 17 may be used in a CN node and comprises the following step:

Step 1701: Receive, from a wireless network node, a message which is associated with a wireless terminal and comprises a second extended DRX cycle length for an inactive state.

In FIG. 17, the CN node receives a second eDRX cycle length for an inactive state from the wireless network node (e.g. BS). The second eDRX cycle length associated with a wireless terminal is received in a message. In an embodiment, the message is associated with one of: the wireless terminal entering or leaving the inactive state, or negotiating the second extended DRX cycle length for the inactive state.

FIG. 18 shows a flowchart of a method according to an embodiment of the present disclosure. The method shown in FIG. 18 may be used in a first wireless network node (e.g. BS or RAN node) and comprises the following step:

Step 1801: Transmit, to a second wireless network node, a message which is associated with a wireless terminal and comprises a first extended DRX cycle length for an idle state and a second extended DRX cycle length for an inactive state.

In this embodiment, the first wireless network node may transmit a message associated with a wireless terminal (e.g. UE) to a second wireless network node (e.g. a neighbor BS or RAN node). The transmitted message comprises a first extended DRX cycle length for an (RRC) idle state and a second extended DRX cycle length for an (RRC) inactive state. In an embodiment, the message is (e.g. associated with, comprised in or configured in) a (RAN, or RAN level) paging message. For example, the paging message may be configured to request the second wireless network node to transmit a paging message to the wireless terminal.

FIG. 19 shows a flowchart of a method according to an embodiment of the present disclosure. The method shown in FIG. 19 may be used in a second wireless network node (e.g. BS or RAN node) and comprises the following step:

Step 1901: Receive, from a first wireless network node, a message which is associated with a wireless terminal and comprises a first extended DRX cycle length for an idle state and a second extended DRX cycle length for an inactive state.

In this embodiment, the second wireless network node may receive a message associated with a wireless terminal (e.g. UE) from a first wireless network node (e.g. a neighbor BS or RAN node). The received message comprises a first extended DRX cycle length for an (RRC) idle state and a second extended DRX cycle length for an (RRC) inactive state. In an embodiment, the message is (e.g. associated with, comprised in or configured in) a (RAN, or RAN level) paging message which is used for (e.g. configured to) requesting paging the wireless terminal. For example, the paging message may be configured to request the second wireless network node to transmit a paging message to the wireless terminal.

While various embodiments of the present disclosure have been described above, it should be understood that they have been presented by way of example only, and not by way of limitation. Likewise, the various diagrams may depict an example architectural or configuration, which are provided to enable persons of ordinary skill in the art to understand exemplary features and functions of the present disclosure. Such persons would understand, however, that the present disclosure is not restricted to the illustrated example architectures or configurations, but can be implemented using a variety of alternative architectures and configurations. Additionally, as would be understood by persons of ordinary skill in the art, one or more features of one embodiment can be combined with one or more features of another embodiment described herein. Thus, the breadth and scope of the present disclosure should not be limited by any of the above-described exemplary embodiments.

It is also understood that any reference to an element herein using a designation such as "first," "second," and so forth does not generally limit the quantity or order of those elements. Rather, these designations can be used herein as a convenient means of distinguishing between two or more elements or instances of an element. Thus, a reference to first and second elements does not mean that only two elements can be employed, or that the first element must precede the second element in some manner.

Additionally, a person having ordinary skill in the art would understand that information and signals can be represented using any of a variety of different technologies and techniques. For example, data, instructions, commands, information, signals, bits and symbols, for example, which may be referenced in the above description can be represented by voltages, currents, electromagnetic waves, magnetic fields or particles, optical fields or particles, or any combination thereof.

A skilled person would further appreciate that any of the various illustrative logical blocks, units, processors, means, circuits, methods and functions described in connection with the aspects disclosed herein can be implemented by electronic hardware (e.g., a digital implementation, an analog implementation, or a combination of the two), firmware, various forms of program or design code incorporating instructions (which can be referred to herein, for convenience, as "software" or a "software unit"), or any combination of these techniques.

To clearly illustrate this interchangeability of hardware, firmware and software, various illustrative components, blocks, units, circuits, and steps have been described above generally in terms of their functionality. Whether such functionality is implemented as hardware, firmware or software, or a combination of these techniques, depends upon the particular application and design constraints imposed on the overall system. Skilled artisans can implement the described functionality in various ways for each particular application, but such implementation decisions do not cause a departure from the scope of the present disclosure. In accordance with various embodiments, a processor, device, component, circuit, structure, machine, unit, etc. can be configured to perform one or more of the functions described herein. The term "configured to" or "configured for" as used herein with respect to a specified operation or function refers to a processor, device, component, circuit, structure, machine, unit, etc. that is physically constructed, programmed and/or arranged to perform the specified operation or function.

Furthermore, a skilled person would understand that various illustrative logical blocks, units, devices, components and circuits described herein can be implemented within or performed by an integrated circuit (IC) that can include a general purpose processor, a digital signal processor (DSP), an application specific integrated circuit (ASIC), a field programmable gate array (FPGA) or other programmable logic device, or any combination thereof. The logical blocks, units, and circuits can further include antennas and/or transceivers to communicate with various components within the network or within the device. A general purpose processor can be a microprocessor, but in the alternative, the processor can be any conventional processor, controller, or state machine. A processor can also be implemented as a combination of computing devices, e.g., a combination of a DSP and a microprocessor, a plurality of microprocessors, one or more microprocessors in conjunction with a DSP core, or any other suitable configuration to perform the functions described herein. If implemented in software, the functions can be stored as one or more instructions or code on a computer-readable medium. Thus, the steps of a method or algorithm disclosed herein can be implemented as software stored on a computer-readable medium.

Computer-readable media includes both computer storage media and communication media including any medium that can be enabled to transfer a computer program or code from one place to another. A storage media can be any available media that can be accessed by a computer. By way of example, and not limitation, such computer-readable media can include RAM, ROM, EEPROM, CD-ROM or other optical disk storage, magnetic disk storage or other magnetic storage devices, or any other medium that can be used to store desired program code in the form of instructions or data structures and that can be accessed by a computer.

In this document, the term "unit" as used herein, refers to software, firmware, hardware, and any combination of these elements for performing the associated functions described herein. Additionally, for purpose of discussion, the various units are described as discrete units; however, as would be apparent to one of ordinary skill in the art, two or more units may be combined to form a single unit that performs the associated functions according embodiments of the present disclosure.

Additionally, memory or other storage, as well as communication components, may be employed in embodiments of the present disclosure. It will be appreciated that, for clarity purposes, the above description has described embodiments of the present disclosure with reference to different functional units and processors. However, it will be apparent that any suitable distribution of functionality between different functional units, processing logic elements or domains may be used without detracting from the present disclosure. For example, functionality illustrated to be performed by separate processing logic elements, or controllers, may be performed by the same processing logic element, or controller. Hence, references to specific functional units are only references to a suitable means for providing the described functionality, rather than indicative of a strict logical or physical structure or organization.

Various modifications to the implementations described in this disclosure will be readily apparent to those skilled in the art, and the general principles defined herein can be applied to other implementations without departing from the scope of this disclosure. Thus, the disclosure is not intended to be limited to the implementations shown herein, but is to be accorded the widest scope consistent with the novel features and principles disclosed herein, as recited in the claims below.

The invention is further defined in the following items:

1. A wireless communication method for use in a wireless device, the method comprising:

determining a hyper system frame number of a paging hyper-frame for a wireless terminal in an extended discontinuous reception, DRX, cycle based on at least one bit of an identifier of the wireless terminal, wherein the at least one bit is different from bits used for determining at least one of a system frame number of a paging frame or a paging occasion for the wireless terminal in a DRX cycle.

2. The wireless communication method of item 1, wherein a length of the extended DRX cycle is greater than a length of the DRX cycle.

3. The wireless communication method of item 1 or 2, wherein a length of the extended DRX cycle is greater than or equal to 10.24 seconds.

4. The wireless communication method of any of items 1 to 3, wherein the hyper system frame number is determined by:

$$\text{H-SFN mod T-eDRX} = \text{UE\_ID\_eDRX mod T-eDRX,}$$

or

$$(\text{H-SFN} + \text{offset}) \text{ mod T-eDRX} = \text{UE\_ID\_eDRX mod T-eDRX,}$$

wherein:

H-SFN is the hyper system frame number,
mod is a modular operator,
T-eDRX is a length of the extended DRX cycle,
offset is a H-SFN offset, and
UE\_ID\_eDRX is the at least one bit and is determined by:

$$\text{UE\_ID\_eDRX} = \text{floor (UE\_ID/M),}$$

or

$$\text{UE\_ID\_eDRX} = (\text{UE\_ID} / M),$$

wherein:

floor () is a floor function,
UE\_ID is the identifier of the wireless terminal, and
M is an integer configured by a higher layer signaling or predefined.

5. The wireless communication method of any of items 1 to 3, wherein the hyper system frame number is determined by:

$$\text{H-SFN mod T-eDRX} = \text{UE\_ID\_eDRX mod T-eDRX,}$$

or

$$(\text{H-SFN} + \text{offset}) \text{ mod T-eDRX} = \text{UE\_ID\_eDRX mod T-eDRX,}$$

wherein:

H-SFN is the hyper system frame number,
mod is a modular operator,
T-eDRX is a length of the extended DRX cycle,
offset is a H-SFN offset, and
UE_ID_eDRX is the at least one bit and is determined by:

$$UE\_ID\_eDRX = floor\ (UE\_ID/(N*Ns)),$$

or

$$UE\_ID\_eDRX = (UE\_ID\ /\ (N*Ns)),$$

wherein:

floor () is a floor function,
UE_ID is the identifier of the wireless terminal,
N is number of paging frames in a second DRX cycle, and
Ns is number of paging occasions for a paging frame.

6. The wireless communication method of any of items 1 to 5, wherein the wireless device is one of the wireless terminal, a core network or a wireless network node.

7. A wireless communication method for use in a wireless device, the method comprising:

determining a system frame number of a starting point of a paging time window within a paging hyper-frame for a wireless terminal in an extended discontinuous reception, DRX, cycle based on at least one bit of an identifier of the wireless terminal,
wherein the at least one bit is different from bits used for determining at least one of a system frame number of a paging frame, a paging occasion for the wireless terminal in a DRX cycle or a hyper system frame number of the paging hyper frame.

8. The wireless communication method of item 7, wherein the system frame number of the start point of the paging time window is determined by:

$$SFN = K1 * i_{eDRX},$$

wherein, SFN is the system frame number of the start point, K1 is an integer, and $i_{eDRX}$ is determined by at least one of following:

$$i_{eDRX} = floor\ (UE\_ID\ /(N*Ns*T\text{-}eDRX))mod\ K2,$$

$$i_{eDRX} = floor\ (floor\ (UE\_ID\ /(N*Ns))\ /\ T\text{-}eDRX)\ mod\ K2,$$

$$i_{eDRX} = floor\ (UE\_ID\ /(N*Ns*T\text{-}eDRX))\ mod\ K2,$$

or

$$i_{eDRX} = (UE\_ID\ /(N*Ns*T\text{-}eDRX)\ mod\ K2,$$

wherein K2 is an integer, UE_ID is the identifier of the wireless terminal, N is number of paging frames in a second DRX cycle, Ns is number of paging occasions for a paging frame, and T-eDRX is a length of the extended DRX cycle.

9. The wireless communication method of item 8, wherein K2 = 1024/K1.

10. The wireless communication method of item 8 or 9, wherein K1 and K2 are predefined or configured by a higher layer signaling.

11. The wireless communication method of any of items 7 to 10, wherein the wireless device is one of the wireless terminal, a core network or a wireless network node.

12. A wireless communication method for use in a wireless terminal, the method comprising:

receiving, from a wireless network node, a first discontinuous reception, DRX, cycle length of a first operation state of the wireless terminal and a second DRX cycle length of a second operation state of the wireless terminal,

wherein the first DRX cycle length is a product of a scaling factor and the second DRX cycle length,

wherein the first operation state is one of an idle state or an inactive state and the second operation state is another one of the idle state or the inactive state.

13. The wireless communication method of item 12, wherein the scaling factor is n or 1/n, wherein n is a positive integer.

14. A wireless communication method for use in a first wireless network node, the method comprising:

transmitting, to a wireless terminal, a core network or a second wireless network node, a first discontinuous reception, DRX, cycle length of a first operation state of the wireless terminal and a second DRX cycle length of a second operation state of the wireless terminal,

wherein the first DRX cycle length is a product of a scaling factor and the second DRX cycle length,

wherein the first operation state is one of an idle state or an inactive state and the second operation state is another one of the idle state or the inactive state.

15. The wireless communication method of item 14, wherein the scaling factor is n or 1/n, wherein n is a positive integer.

16. A wireless communication method for use in a wireless device, the method comprising:

determining a starting point of a paging time window within a first paging hyper-frame for a wireless terminal based on a length of an extended DRX cycle,

wherein the extended DRX cycle is associated with an idle state or an inactive state.

17. The wireless communication method of item 16, wherein the paging time window is used for monitoring CN paging and RAN paging.

18. The wireless communication method of item 16 or 17, wherein an extended DRX cycle length associated with the idle state is shorter than or equal to an extended DRX cycle length associated with the inactive state and the extended DRX cycle is associated with the idle state.

19. The wireless communication method of item 16 or 17, wherein an extended DRX cycle length associated with the idle state is longer than or equal to an extended DRX cycle length associated with the inactive state and the extended DRX cycle is associated with the idle state.

20. The wireless communication method of any of items 16 to 19, wherein the first paging hyper-frame within a first extended DRX cycle overlaps a second paging hyper-frame within a second extended DRX cycle,
wherein the first extended DRX cycle is associated with one of the idle state or the inactive state and the second extended DRX cycle is associated with another one of the idle state or the inactive state.

21. The wireless communication method any of items 16 to 20, wherein the wireless device is configured with an extended DRX cycle for the idle state and another extended DRX cycle for the inactive state.

22. The wireless communication method of any of items 16 to 21, wherein the first paging hyper-frame is associated with a first extended DRX cycle, wherein the first extended DRX cycle is associated with the inactive state, or the shorter one between the extended DRX cycle for the inactive state and the extended DRX cycle for the idle state.

23. The wireless communication method of any of items 16 to 22, wherein each of the extended DRX cycle length associated with the idle state and the extended DRX cycle length associated with the inactive state is longer than 10.24 seconds.

24. The wireless communication method of any of items 16 to 23, wherein the wireless device is one of the wireless terminal, a core network or a wireless network node.

25. A wireless communication method for use in a wireless device, the method comprising:

determining a paging occasion for a wireless terminal based on a length of an extended DRX cycle,

wherein the extended DRX cycle is associated with an idle state or an inactive state.

26. The wireless communication method of item 25, wherein the paging occasion is configured to monitor a paging from a core network and from a wireless network node.

27. The wireless communication method of item 25 or 26, wherein an extended DRX cycle length associated with the idle state is shorter than or equal to an extended DRX cycle length associated with the inactive state and the extended DRX cycle is associated with the idle state.

28. The wireless communication method of item 25 or 26, wherein an extended DRX cycle length associated with the idle state is longer than or equal to an extended DRX cycle length associated with the inactive state and the extended DRX cycle is associated with the idle state.

29. The wireless communication method of any of items 25 to 28, wherein the extended DRX cycle is associated with the idle state, and
wherein a first paging occasion associated with the idle state and a second paging occasion associated with the inactive state are determined based on the length of the extended DRX cycle associated with the idle state.

30. The wireless communication method of any of items 25 to 29, wherein a first paging frame comprising the PO in a first DRX cycle overlaps a second paging frame comprising the PO in a second DRX cycle,
wherein the first DRX cycle is associated with one of the idle state or the inactive state and the second DRX cycle is associated with another one of the idle state or the inactive state.

31. The wireless communication method of any of items 25 to 30, wherein each of the extended DRX cycle length associated with the idle state and the extended DRX cycle length associated with the inactive state is shorter than or equal to 10.24 seconds.

32. The wireless communication method of any of items 25 to 31, wherein the wireless device is one of the wireless terminal, a core network or a wireless network node.

33. A wireless communication method for use in a core network node, the method comprising:
transmitting, to a wireless network node, a message which is associated with a wireless terminal and comprises a first extended discontinuous reception, DRX, cycle length for an idle state and a second extended DRX cycle length for an inactive state.

34. The wireless communication method of item 33, wherein the message is associated with one of:

a setup of wireless terminal context of the wireless terminal,

a modification of wireless terminal context of the wireless terminal, or

a paging message.

35. A wireless communication method for use in a wireless network node, the method comprising:
receiving, from a core network node, a message which is associated with a wireless terminal and comprises a first extended discontinuous reception, DRX, cycle length for an idle state and a second extended DRX cycle length for an inactive state.

36. The wireless communication method of item 35, wherein the message is associated with one of:

a setup of wireless terminal context of the wireless terminal,

a modification of wireless terminal context of the wireless terminal, or

a paging message.

37. A wireless communication method for use in a wireless network node, the method comprising:
transmitting, to a core network node, a message which is associated with a wireless terminal and comprises a second extended DRX cycle length for an inactive state.

38. The wireless communication method of item 37, wherein the message is associated with one of:

the wireless terminal entering or leaving the inactive state, or

negotiating the second extended DRX cycle length for the inactive state.

39. A wireless communication method for use in a core network node, the method comprising:
receiving, from a wireless network node, a message which is associated with a wireless terminal and comprises a second extended DRX cycle length for an inactive state.

40. The wireless communication method of item 39, wherein the message is associated with one of:

the wireless terminal entering or leaving the inactive state, or

negotiating the second extended DRX cycle length for the inactive state.

41. A wireless communication method for use in a first wireless network node, the method comprising:
transmitting, to a second wireless network node, a message which is associated with a wireless terminal and comprises a first extended discontinuous reception, DRX, cycle length for an idle state and a second extended DRX cycle length for an inactive state.

42. The wireless communication method of item 41, wherein the message is associated with a paging message which is used for requesting paging the wireless terminal.

43. A wireless communication method for use in a second wireless network node, the method comprising:
receiving, from a first wireless network node, a message which is associated with a wireless terminal and comprises a first extended discontinuous reception, DRX, cycle length for an idle state and a second extended DRX cycle length for an inactive state.

44. The wireless communication method of item 43, wherein the message is associated with a paging message which is used for requesting paging the wireless terminal.

45. A wireless device, comprising:

a processor, configured to determine a hyper system frame number of a paging hyper-frame for a wireless terminal in an extended discontinuous reception, DRX, cycle based on at least one bit of an identifier of the wireless terminal,

wherein the at least one bit is different from bits used for determining at least one of a system frame number of a paging frame or a paging occasion for the wireless terminal in a DRX cycle.

46. The wireless device of item 45, wherein the processor is further configured to perform a wireless communication method of any of items 2 to 6.

47. A wireless device, comprising:

a processor, configured to determine a system frame number of a starting point of a paging time window within a paging hyper-frame for a wireless terminal in a extended discontinuous reception, DRX, cycle based on at least one bit of an identifier of the wireless terminal,

wherein the at least one bit is different from bits used for determining at least one of a system frame number of a paging frame, a paging occasion for the wireless terminal in a DRX cycle or a hyper system frame number of the paging hyper frame.

48. The wireless device of item 47, wherein the processor is further configured to perform a wireless communication method of any of items 8 to 11.

49. A wireless terminal, comprising:

a communication unit, configured to receive, from a wireless network node, a first discontinuous reception, DRX, cycle length of a first operation state of the wireless terminal and a second DRX cycle length of a second operation state of the wireless terminal,

wherein the first DRX cycle length is a product of a scaling factor and the second DRX cycle length,

wherein the first operation state is one of an idle state or an inactive state and the second operation state is another one of the idle state or the inactive state.

50. The wireless terminal of item 49, further comprising a processor configured to perform a wireless communication method of item 13.

51. A first wireless network node, comprising:

a communication unit, configured to transmitting, to a wireless terminal, a core network or a second wireless network node, a first discontinuous reception, DRX, cycle length of a first operation state of the wireless terminal and a second DRX cycle length of a second operation state of the wireless terminal,

wherein the first DRX cycle length is a product of a scaling factor and the second DRX cycle length,

wherein the first operation state is one of an idle state or an inactive state and the second operation state is another one of the idle state or the inactive state.

52. The first wireless network node of item 51, further comprising a processor configured to perform a wireless communication method of item 15.

53. A wireless device, comprising:

a processor, configured to determine a starting point of a paging time window within a first paging hyper-frame for a wireless terminal based on a length of an extended DRX cycle,

wherein the extended DRX cycle is associated with an idle state or an inactive state.

54. The wireless device of item 53, wherein the processor is further configured to perform a wireless communication method of any of items 17 to 24.

55. A wireless device, comprising:

a processor, configured to determine a paging occasion for a wireless terminal based on a length of an extended DRX cycle,

wherein the extended DRX cycle is associated with an idle state or an inactive state.

56. The wireless device of item 55, wherein the processor is further configured to perform a wireless communication method of any of items 26 to 32.

57. A core network node, comprising:
a communication unit, configured to transmit, to a wireless network node, a message which is associated with a wireless terminal and comprises a first extended discontinuous reception, DRX, cycle length for an idle state and a second extended DRX cycle length for an inactive state.

58. The core network node of item 57, further comprising a processor configured to perform a wireless communication method of item 34.

59. A wireless network node, comprising:
a communication unit, configured to receive, from a core network node, a message which is associated with a wireless terminal and comprises a first extended discontinuous reception, DRX, cycle length for an idle state and a second extended DRX cycle length for an inactive state.

60. The wireless network node of item 59, further comprising a processor configured to perform a wireless communication method of item 36.

61. A wireless network node, comprising:
a communication unit, configured to transmit, to a core network node, a message which is associated with a wireless terminal and comprises a second extended DRX cycle length for an inactive state.

62. The wireless network node of item 61, further comprising a processor configured to perform a wireless communication method of item 38.

63. A core network node, comprising:
a communication unit, configured to receive, from a wireless network node, a message which is associated with a wireless terminal and comprises a second extended DRX cycle length for an inactive state.

64. The core network node of item 63, further comprising a processor configured to perform a wireless communication method of item 40.

65. A first wireless network node, comprising:
a communication unit, configured to transmit, to a second wireless network node, a message which is associated with a wireless terminal and comprises a first extended discontinuous reception, DRX, cycle length for an idle state and a second extended DRX cycle length for an inactive state.

66. The first wireless network node of item 65, further comprising a processor configured to perform a wireless communication method of item 42.

67. A second wireless network node, comprising:
a communication unit, configured to receive, from a first wireless network node, a message which is associated with a wireless terminal and comprises a first extended discontinuous reception, DRX, cycle length for an idle state and a second extended DRX cycle length for an inactive state.

68. The second wireless network node of item 67, further comprising a processor configured to perform a wireless communication method of item 44.

69. A computer program product comprising a computer-readable program medium code stored thereupon, the code, when executed by a processor, causing the processor to implement a wireless communication method recited in any one of items 1 to 44.

**Claims**

1. A wireless communication method for use in a wireless terminal, the method comprising:

   determining, by the wireless terminal in a Radio Resource Control, RRC, inactive state, a starting point of a paging time window within a first paging hyper-frame for the wireless terminal based on a length of a second extended DRX cycle, wherein the second extended DRX cycle is associated with an idle state and the first paging hyper-frame is associated with a first extended DRX cycle associated with the inactive state;
   monitoring, by the wireless terminal in the RRC inactive state, both CN paging and RAN paging in the paging time window starting from the starting point.

2. The wireless communication method of claim 1, wherein an extended DRX cycle length associated with the idle state is longer than or equal to an extended DRX cycle length associated with the inactive state.

3. The wireless communication method of any one of claims 1 to 2, wherein the first paging hyper-frame within a first extended DRX cycle overlaps a second paging hyper-frame within a second extended DRX cycle.

4. The wireless communication method any one of claims 1 to 3, wherein the wireless terminal is configured with the second extended DRX cycle for the idle state and the first extended DRX cycle for the inactive state.

5. The wireless communication method of any one of claims 1 to 4, wherein each of the second extended DRX cycle length associated with the idle state and the first extended DRX cycle length associated with the inactive state is longer than 10.24 seconds.

6. A wireless terminal, comprising:
   a processor, configured to:

   determine, while the wireless terminal is in a Radio Resource Control, RRC, inactive state, a starting point of a paging time window within a first paging hyper-frame for the wireless terminal based on a length of a second extended DRX cycle,
   wherein the second extended DRX cycle is associated with an idle state and the first paging hyper-frame is associated with a first extended DRX cycle associated with the inactive state; and
   monitor both CN paging and RAN paging in the paging time window starting from the starting point.

7. The wireless terminal according to claim 6, wherein an extended DRX cycle length associated with the idle state is longer than or equal to an extended DRX cycle length associated with the inactive state.

8. The wireless terminal of any one of claims 6 or 7, wherein the first paging hyper-frame within a first extended DRX cycle overlaps a second paging hyper-frame within a second extended DRX cycle.

9. The wireless terminal of any one of claims 6 to 8, wherein the wireless terminal is configured with the second extended DRX cycle for the idle state and the first extended DRX cycle for the inactive state.

10. The wireless terminal of any one of claims 6 to 9, wherein each of the second extended DRX cycle length associated with the idle state and the first extended DRX cycle length associated with the inactive state is longer than 10.24 seconds.

11. A computer program product comprising a computer-readable program medium code stored thereupon, the code, when executed by a processor, causing the processor to implement a wireless communication method recited in any one of claims 1 to 5.

Paging occassions

FIG. 1

FIG. 2

FIG. 3

Overlapped PH according to T-eDRX for RRC idle and RRC inactive

PTW_start according to T-eDRX of RRC idle          PTEW_start according to T-eDRX for RRC inactive

## FIG. 4

Overlapped PF according to T-eDRX for RRC idle and RRC inactive

PO according to T-eDRX of RRC idle          PO according to T-eDRX for RRC inactive

## FIG. 5

60

600

620

Communication
unit

622

Processor

Storage unit

Program
Code

610

612

## FIG. 6

70

700

720

Communication
unit

722

Processor

Storage unit

Program
Code

710

712

## FIG. 7

Determine a hyper system frame number of a paging hyper-frame for a wireless terminal in an eDRX cycle based on at least one bit of an identifier of the wireless terminal, wherein the at least one bit is different from bits used for determining at least one of a system frame number of a paging frame or a paging occasion for the wireless terminal in a DRX cycle — 801

## FIG. 8

Determine a system frame number of a starting point of a paging time window within a paging hyper-frame for a wireless terminal in an eDRX cycle based on at least one bit of an identifier of the wireless terminal, wherein the at least one bit is different from bits used for determining at least one of a system frame number of a paging frame, a paging occasion for the wireless terminal in a DRX cycle or a hyper system frame number of the paging hyper frame — 901

## FIG. 9

Receive, from a wireless network node, a first DRX cycle length of a first operation state of the wireless terminal and a second DRX cycle length of a second operation state of the wireless terminal — 1001

## FIG. 10

Transmit, to a wireless terminal, a core network or a second wireless network node, a first DRX cycle length of a first operation state of the wireless terminal and a second DRX cycle length of a second operation state of the wireless terminal — 1101

## FIG. 11

Determine a starting point of a paging time window within a
first paging hyper-frame for a wireless terminal based on a
length of an extended DRX cycle, wherein the extended DRX
cycle is associated with an idle state or an inactive state

1201

FIG. 12

Determine a paging occasion for a wireless terminal based
on a length of an extended DRX cycle, wherein the extended
DRX cycle is associated with an idle state or an inactive state

1301

FIG. 13

Transmit, to a wireless network node, a message which
is associated with a wireless terminal and comprises a
first eDRX cycle length for an idle state and a second
extended DRX cycle length for an inactive state

1401

FIG. 14

Receive, from a core network node, a message which is
associated with a wireless terminal and comprises a
first eDRX cycle length for an idle state and a second
extended DRX cycle length for an inactive state

1501

FIG. 15

Transmit, to a core network node, a message which is associated with a wireless terminal and comprises a second eDRX cycle length for an inactive state ⌐ 1601

FIG. 16

Receive, from a wireless network node, a message which is associated with a wireless terminal and comprises a second extended DRX cycle length for an inactive state ⌐ 1701

FIG. 17

Transmit, to a second wireless network node, a message which is associated with a wireless terminal and comprises a first extended DRX cycle length for an idle state and a second extended DRX cycle length for an inactive state ⌐ 1801

FIG. 18

Receive, from a first wireless network node, a message which is associated with a wireless terminal and comprises a first extended DRX cycle length for an idle state and a second extended DRX cycle length for an inactive state. ⌐ 1901

FIG. 19